Europäisches Patentamt

(19) European Patent Office

Office européen des brevets

(11) Publication number: **0 091 985**
**A1**

(12) # EUROPEAN PATENT APPLICATION

(21) Application number: **82109072.7**

(22) Date of filing: **30.09.82**

(51) Int. Cl.³: **H 02 K 21/24**, H 02 K 7/18

(30) Priority: **15.04.82 PH 27137**

(43) Date of publication of application: **26.10.83**
**Bulletin 83/43**

(84) Designated Contracting States: **AT BE CH DE FR GB IT LI LU NL SE**

(71) Applicant: **Anos, Alfredo M., no. 6 Anak Bayan San Francisco del Monte, Quezon City Metro Manilla (PH)**

(72) Inventor: **Anos, Alfredo M., no. 6 Anak Bayan San Francisco del Monte, Quezon City Metro Manilla (PH)**

(74) Representative: **Körner, Ekkehard, Dipl.-Ing. et al, Patentanwälte Müller-Börner, Wey & Körner Widenmayerstrasse 49, D-8000 München 22 (DE)**

(54) **Electro power generating device.**

(57) A brushless and friction-less electrical power generating device with a high conversion efficiency, requiring less force to operate and consuming no fuel in generating electricity is provided. Said device has a series or multi-layer of rotating plates, each having a plurality of radially spaced magnets, and a series of stationary plates with coiled windings radially disposed thereupon, wherein said stationary plates are alternately disposed on each of the rotatable plates.

EP 0 091 985 A1

ACTORUM AG

## ELECTRO POWER GENERATING DEVICE

TO ALL WHOM IT MAY CONCERN:

This invention generally relates to an electrical power generating device that can easily produce an alternating voltage of 110 to 220 volts.

In my Philippine Patent No. 13225 issued on February 13, 1980, I have disclosed a power generating device consisting of a superposed rotatable upper housing and a lower or stationary housing. The lower housing is defined with a circular horizontal wall having on its upper surface a series of radially spaced coiled windings. The rotatable housing integrally carried on the upper surface of its circular horizontal wall a series of radially disposed wind power arctuated blades uprightly extending therefrom. Secured on the lower surface of this upper housing and substantially insulated therein is a circular plate having on its lower surface a series of radially spaced magnets securely held or fixed thereto and in communication with said coiled windings. The upper housing is rotatably secured with the lower housing through an axial shaft centrally disposed therein.

The present invention which is actually another embodiment or modification of my Philippine Patent No. 13225 now contemplates stationary upper and lower circular closure members having within a series or multi-layer of rotatable plates or disk and stationary plates alternately with said rotatable plates. Said alternate plates are disposed between said upper and lower closure members in superposed and proximately spaced-apart manner. Each of said rotatable plates carries a series of magnets radially spaced underneath thereof. Each of said stationary plate has a series of coiled windings radially disposed on its upper surface and in communication with said magnets. Rotatably secured vertically on the upper surface of said upper closure member is a series of radially disposed wind powered arctuated blades having an axial shaft downwardly extending therefrom. Secured on the extended portion of this shaft is the said series of rotatable horizontal plates.

Accordingly, an object of the invention is to provide a brushless and friction-less electrical power generating device with a high conversion efficiency that requires less force to operate and consumes no fuel in generating electricity.

Another object of the invention is to provide a power generating device having a series or multi-layer of rotatable plates each having a series of magnets radially spaced thereto and a series of coiled windings radially disposed on a series of stationary plates, each of said stationary plates being alternately disposed on each of the rotatable plates.

Still another object of the invention is to provide a power generating device having upper and lower closure members detachably securing said alternate layers rotatable and stationary plates.

A further object of the invention is to provide an electric power generating device that can be driven by wind power of all forms including chimney or flue draft, steam generated from solar thermal energy engines, solid and liquid biofuels, biogas, flowing water, falling water, sea waves, geothermal energy, draft animals, pedal power or manually operated cranks and levers, and other conventional fuels.

Still a further object of this invention is to provide an electric power generating device that is simple in structure, light and compact, and economical to manufacture.

These objects and other advantages of the invention will be fully comprehended upon a reading of the following description in conjunction with the accompanying drawings, wherein:

FIGURE 1 is a perspective view of the electrical power generating device embodying the invention;

FIGURE 2 is a central cross-sectional view taken along line 2-2 of Figure 1; and

FIGURE 3 is an exploded view showing one of a layer of the magnet-carrying rotatable plates and the coiled winding's stationary plate.

Referring now in detail to the different views of the drawings, there is illustrated an electrical power generating device generally designated as 10. This device essentially comprises circular upper and lower closure members 11 and 12, a multi-layer of magnet-carrying rotatable plates 13 and coiled winding's stationary plates 14 which are alternately disposed with each of said rotatable plates 13 and superposedly fixed between said closure members 11 and 12, and a series of wind-powered rotatable arctuated blades 15 radially disposed vertically on said upper closure members 11 having a downwardly extending axial shaft 16 securing horizontally said layer of rotatable plates 13.

The axial shaft 16 can also be driven by energy derived from flowing or falling waters, sea waves, steam generated by solar or geothermal energy engines, human and animal energy, solid and liquid biofuels, biogas, and other conventional fuels.

Each of said upper and lower closure members 11 and 12 has horizontal walls 17 and 18 and converging circumferential side walls 19 and 20 which terminate with horizontal annular flanges 21 and 22, respectively. On these flanges 21 and 22, the device 10 may be held by securing bolt B. Centrally disposed on each of said upper and lower members 11 and 12 is a central circular opening 23 and a circular upright protrusion 24, respectively, through which suitable bearings 25 and 26 are fitted. Journaled for rotation on these bearings 25 and 26 is the downwardly extended portion E of the shaft 16.

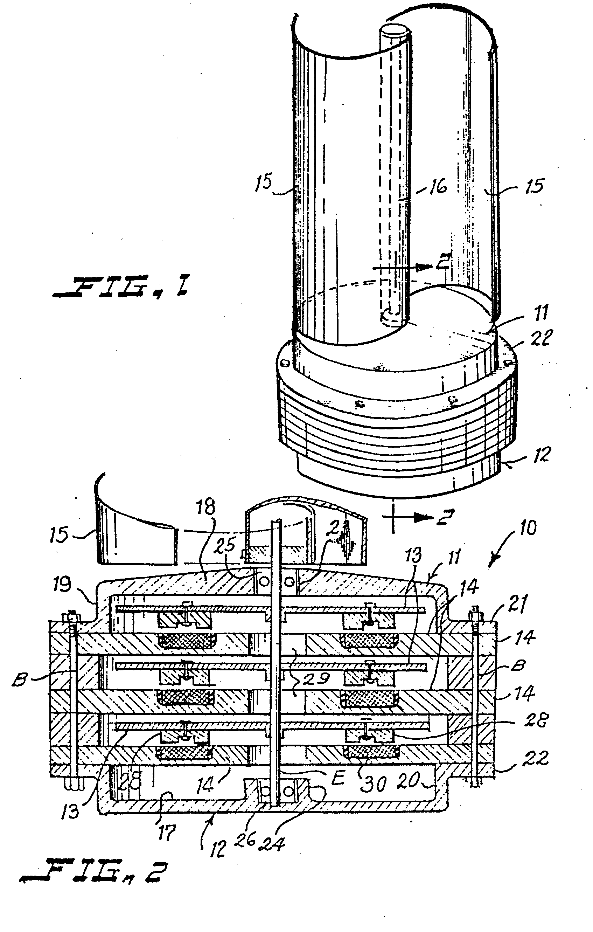

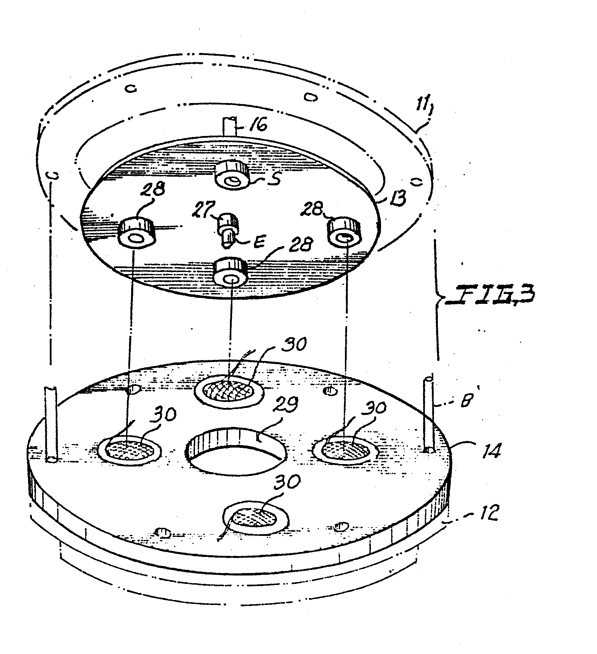

Alternately secured with the upper and lower closure members and in superposed manner is the multi-layer of rotatable plates 13 and the stationary plates 14. As best illustrated in Figure 3, each of the rotatable plates 13 is circular in structure having a central opening with a protruding skirt 27 which is secured to said extended shaft E. Radially spaced on each of said rotatable plates 13 is a series of uniform circular magnets 28 which are secured by suitable screws on its lower surface. Each of the stationary plates 14 which is diametrically of greater dimension comparably with the rotatable plates 13 has a central opening 29. These stationary plates 14 are spacedly held fixed in superposed manner with the said upper and lower closure members 11 and 12. Radially disposed on the upper surface of each of said stationary plates 14 and spaced-apart thereof is a series of circular depressions each having coiled windings 30 suitably secured thereto.

As best shown in Figure 2, the invention can be readily understood when any force of the wind impinges on the blades 15 the velocity will rotate each of the rotatable plates 13 carrying the magnets 26 continuously over each of the stationary plates 14 having coiled windings and thus produce electricity on its terminal through which power may be tapped to produce more or less 110 volts. However, when the terminals of each of the coiled windings 30 are connected in series, a power of 220 volts will be generated.

CLAIMS:

1. An electrical power generating device comprising of circular upper and lower members each having a horizontal wall and a converging side wall which terminate with an annular horizontal flange, each of said horizontal wall respectively having a central opening and a circular upright protrusion, a series of radially disposed windpowered arctuated blades upwardly extending rotatably on said upper closure member having a downwardly extending axial shaft rotatably secured on said members, a series of rotatable plates spacedly secured horizontally to said extended shaft, each of said rotatable plates having a series of spaced-apart magnets radially disposed underneath its lower surface, a series of stationary plates alternately disposed horizontally with said rotatable plates having a central opening and held fixed in superposed relation with the flange portion of said upper and lower members, each of said stationary plates having a series of spaced-apart circular depressions on its upper surface through which coiled windings are fitted in radial formation on each of said depressions and in communication with said magnets.

2. An electric power generating device as defined in claim 1, having a series or multi-layer of rotatable plates each having a series of magnets radially disposed on a series of stationary plates, each of said stationary plates being alternately disposed on each of the rotatable plates.

3. An electric power generating device as defined in claim 1, that is brushless and friction-less, with a high conversion efficiency which requires less force to operate and consumes no fuel in generating elecricity.

4. An electric power generating device as defined in claim 1, that can be driven by wind power of all forms,

including chimney or flue draft, flowing or falling waters, sea waves, steam generated from solar or geothermal energy, human and animal energy, solid and liquid biofuels, biogas, and other conventional fuels.

5. An electric power generating device that is simple in structure, light and compact, and economical to manu-facture.

———————

FIG. 1

FIG. 2

1/2

0091985

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | GB-A-2 006 542 (GEN-TECH)<br>* Page 2, lines 6-25; claim 1 * | 1-4 | H 02 K 21/24<br>H 02 K 7/18 |
| Y | EP-A-0 030 357 (SIEMENS)<br>* Page 3, lines 21-30 * | 1-4 | |
| Y | US-A-3 169 204 (G. MORESSEE et al.)<br>* column 2, lines 34-60 * | 1-4 | |
| A | US-A-3 832 581 (G.R. HOFFMANN et al.)<br>* Column 2, line 64 - column 4, line 7 * | | |
| A | US-A-3 219 861 (R.P. BURR)<br><br>* Column 1, line 60 - column 3, line 3 * | | TECHNICAL FIELDS SEARCHED (Int. Cl. 3) |
| A | DE-A-2 248 571 (W. SCHÖNBALL)<br><br>* Complete document * | | H 02 K 7/00<br>H 02 K 21/00 |

The present search report has been drawn up for all claims

| Place of search | Date of completion of the search | Examiner |
|---|---|---|
| BERLIN | 30-06-1983 | GESSNER E A F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO Form 1503. 03.82